(19) **Europäisches Patentamt**

**European Patent Office**

**Office européen des brevets**

(11) **EP 0 886 146 B1**

(12) **FASCICULE DE BREVET EUROPEEN**

(45) Date de publication et mention
de la délivrance du brevet:
**25.08.2004 Bulletin 2004/35**

(51) Int Cl.⁷: **G01P 15/125**, G01V 1/18

(21) Numéro de dépôt: **98401456.3**

(22) Date de dépôt: **15.06.1998**

(54) **Accéléromètre miniaturisé du type à compensation par ressort de l'effet de la pesanteur et son procédé de fabrication.**

Miniaturisierter Beschleunigungssensor mit Kompensation der Schwerkraft mittels einer Feder sowie Verfahren zu seiner Herstellung

Miniaturised accelerometer of the type utilising force of gravity compensation by means of a spring and method of its manufacture

(84) Etats contractants désignés:
**DE GB IT**

(30) Priorité: **17.06.1997 FR 9707502**

(43) Date de publication de la demande:
**23.12.1998 Bulletin 1998/52**

(73) Titulaire: **COMMISSARIAT A L'ENERGIE ATOMIQUE**
**75015 Paris (FR)**

(72) Inventeurs:
• **Brun, Jean**
**38800 Champagnier (FR)**

• **Caplet, Stéphane**
**38360 Sassennage (FR)**

(74) Mandataire: **Poulin, Gérard et al**
**BREVALEX**
**3, rue du docteur Lancereaux**
**75008 Paris (FR)**

(56) Documents cités:
EP-A- 0 149 572     EP-A- 0 605 300
FR-A- 2 735 580     GB-A- 2 063 076
US-A- 2 638 578

# EP 0 886 146 B1

**Description**

La présente invention concerne un accéléromètre miniaturisé du type à compensation par ressort de l'effet de la pesanteur. Elle concerne également un procédé de fabrication d'un tel Accéléromètre.

L'invention permet de compenser les effets de la pesanteur auxquels l'objet est soumis et donc d'améliorer sa sensibilité à une variation d'accélération. Elle s'applique tout particulièrement aux dispositifs mécaniques de faibles dimensions fabriqués par des techniques relevant de la micro-électronique (micro-usinage par exemple). Le domaine principal d'application de cet accéléromètre est l'étude du mouvement ou du comportement des milieux soumis à la gravité (sismologie par exemple).

Un capteur d'accélération est composé d'une masse sismique généralement supportée par un ou plusieurs éléments flexibles. Lorsque cette masse subit des variations d'accélération, celle-ci se déplace et les éléments flexibles se déforment. Le système revient à sa position initiale dès lors que la force due à l'accélération s'annule. Au repos, un capteur d'accélération horizontale n'est soumis à aucun effort. En revanche un accéléromètre à axe sensible vertical subit une force minimale permanente F, due à la pesanteur telle que :

$$F = M.g$$

M représentant la masse sismique et g la constante gravitationnelle.

Cette force permanente s'ajoute au signal à mesurer et oblige à une augmentation de la dynamique du capteur lorsqu'on cherche à mesurer des accélérations verticales très faibles (inférieures à $10^{-6}$ g). Il est donc important dans ce cas de compenser l'effort dû à la pesanteur par une force constante dirigée dans le sens opposé.

Les procédés utilisés pour compenser l'effet de la pesanteur peuvent être classés en deux familles de procédés : ceux qui font intervenir une source d'énergie électrique et ceux qui mettent en oeuvre la force de rappel d'un ressort.

Les procédés faisant intervenir une source d'énergie électrique utilisent une force électrostatique ou électromagnétique qui maintient la masse sismique en suspension. Les systèmes à compensation électrostatique ou électromagnétique de la force de pesanteur sont complexes et coûteux. Ils sont consommateurs d'énergie et nécessitent de faire appel à des circuits d'asservissement qui sont sources de bruit et dont la stabilité est difficile à maîtriser notamment dans le cas des forces électrostatiques. Les accéléromètres fabriqués à partir des techniques de la micro-électronique n'utilisent à ce jour que des systèmes de compensation électrostatique ou électromagnétique malgré leurs inconvénients. Ceci s'explique par le fait qu'il n'avait pas été proposé jusqu'à présent de solution simple pour réaliser un ressort étiré par des techniques collectives.

Les procédés de compensation de l'effet de la pesanteur qui mettent en oeuvre la force de rappel d'un ressort sont généralement utilisés dans les appareils fabriqués à partir des techniques classiques de la mécanique, c'est-à-dire par usinage puis assemblage individuel de pièces. Cependant, il a été récemment proposé, dans la demande FR-A-2 735 580, un accéléromètre dont la masse sismique est maintenue en équilibre grâce à un ressort précontraint, et qui peut être élaboré par des techniques relevant de la mécanique, de la micro-mécanique ou de la micro-électronique. Le procédé de compensation proposé est basé sur le principe d'un ressort en forme de lame réalisé par précontrainte d'une surface d'un élément (une poutre par exemple) supportant la masse sismique.

[0008]  - Il existe enfin des systèmes mixtes utilisant à la fois une force d'origine électrostatique ou électromagnétique et la force de rappel d'un ressort, comme cela est divulgué dans l'article « The Effects of Spring and Magnetic Distortions on Electromagnetic Geophones » de S.J. Chen et K. Chen, paru dans J. Phys. E : Sci. Instrum. 21 (1988) 943-947.

Le procédé de compensation par ressort de la force de pesanteur a comme avantage, par rapport au procédé faisant intervenir une source d'énergie électrique, de ne pas introduire de bruits parasites produits par un système d'asservissement. En outre, une compensation par ressort constitue un procédé simple, stable, peu coûteux et fiable.

Les capteurs d'accélération à axe sensible vertical pour lesquels l'effet de la pesanteur sur la masse est compensé par un ressort sont actuellement réalisés par assemblage de différentes pièces mécaniques. En raison de cette construction ces dispositifs ne présentent pas un facteur de qualité Q très élevé. Ce paramètre structural est relié à la densité de bruit Brownien S du dispositif par la relation suivante qui montre que S est inversement proportionnel à Q et M

$$s \simeq \sqrt{\frac{4 k_b T \omega_r}{MQ\left\{\left(\omega^2 - \omega_r^2\right)^2 + \frac{\omega^2 \omega_r^2}{Q^2}\right\}}}$$

avec

$$Q = \frac{2\pi\omega_r}{M\lambda}$$

$\lambda$ : facteur d'amortissement
$\omega$ : fréquence
$\omega_r$ : fréquence de résonance
$k_b$ : constante de Boltzman
$T$ : température

Pour conserver un bruit Brownien qui ne perturbe pas la mesure, les dispositifs actuels ont une masse M importante. Néanmoins, cette solution limite la miniaturisation de l'ensemble. Les appareils performants (capable de détecter quelques nano G sous 1G) les plus petits pèsent donc plusieurs kilogrammes et occupent un volume de quelques dizaines de cm$^3$.

La miniaturisation d'un dispositif performant exige de diminuer la masse M et donc d'augmenter le facteur de qualité. Cela peut être obtenu en réalisant l'ensemble du capteur (masse et ressort) dans un matériau ayant un facteur de qualité élevé comme par exemple le silicium monocristallin. Néanmoins, la réalisation d'un dispositif compact comportant un ressort solidaire de la masse pose des difficultés technologiques. En effet, il est difficile de rendre solidaire de petites pièces mécaniques comme le ressort et la masse sismique par des moyens mécaniques telles que des vis ou de la colle sans provoquer des zones où les frottements internes sont importants et provoquent des phénomènes d'amortissement préjudiciables au facteur de qualité. Il faut également préserver une grande souplesse du ressort qui, comme le montrent les équations suivantes, influe sur la sensibilité du capteur.

$$s = \frac{1}{k} \qquad \text{et} \qquad S = \frac{M}{K + k}$$

$s$ : souplesse du ressort
$k$ : raideur du ressort
$S$ : sensibilité
$K$ : raideur du dispositif sans ressort de compensation

L'objet de la présente invention est de proposer un accéléromètre miniaturisé à compensation par ressort de la force de pesanteur, cet accéléromètre pouvant être réalisé par des procédés de fabrication de la micro-électronique procurant les avantages suivants : faible coût, miniaturisation, bonne qualité mécanique des matériaux. On parvient à ce résultat en réalisant les différents éléments de l'accéléromètre (support, masse sismique et ressort) dans un même substrat, ce substrat pouvant être un substrat composite.

Un objet de la présente invention consiste donc en un accéléromètre miniaturisé comportant :

- un support,
- une masse sismique susceptible d'être soumise à une force induite par une accélération à mesurer,
- des moyens de liaison mécanique entre le support et la masse sismique, susceptibles de fléchir sous l'effet de ladite force,
- des moyens de détection permettant de déterminer l'accélération à partir de la force induite dans la masse sismique,
- des moyens élastiques de compensation de la force exercée sur la masse sismique par la pesanteur et reliant la masse sismique et le support,

caractérisé en ce que le support, la masse sismique, les moyens de liaison mécanique et les moyens élastiques de compensation sont des éléments réalisés dans un même substrat, des moyens de réglage étant prévus pour mettre sous tension mécanique les moyens élastiques de compensation afin de compenser la force exercée sur la masse sismique par la pesanteur.

Avantageusement, les moyens élastiques comprennent au moins un ressort possédant deux extrémités, l'une des extrémités du ressort faisant corps avec l'un des éléments, support ou masse sismique, l'autre extrémité du ressort étant déplaçable par les moyens de réglage pour être fixée sur l'autre élément, support ou masse sismique, et ainsi mettre le ressort sous tension mécanique.

Les moyens de réglage peuvent être des moyens permettant de déplacer l'extrémité déplaçable du ressort dans un seul sens. Dans ce cas, ils peuvent comprendre des lames flexibles et des butées de retenue disposées de manière conjuguée sur l'extrémité déplaçable du ressort et sur l'élément, support ou masse sismique, sur lequel l'extrémité déplaçable du ressort est fixée.

Les moyens de détection peuvent être des moyens de détection capacitifs. Dans ce cas, ils peuvent comprendre des dents fixées au support pour former de premières électrodes et des dents fixées à la masse sismique pour former de secondes électrodes, disposées de façon à former des peignes interdigités.

Le substrat peut être constitué d'un bloc massif de quartz ou de silicium. Il peut aussi être du type silicium-sur-isolant.

Un autre objet de la présente invention consiste en un procédé de réalisation d'au moins un accéléromètre miniaturisé dans un substrat d'un matériau donné, caractérisé en ce qu'il comporte les étapes consistant à :

a) graver le substrat selon son épaisseur pour définir :

- un support,
- une masse sismique,
- des moyens de liaison mécanique entre le support et la masse sismique susceptibles de fléchir sous l'effet de la force induite par une accélération à mesurer,
- au moins un organe destiné à constituer un ressort, dont l'une des extrémités fait corps avec l'un des éléments, support ou masse sismique, et dont l'autre extrémité se termine par une tête pourvue de moyens d'accrochage,
- des moyens d'accrochage sur l'autre élément, support ou masse sismique, complémentaires des moyens d'accrochage de la tête de ressort,

b) mettre le ressort sous tension mécanique par accrochage de la tête de ressort sur ledit autre élément, support ou masse sismique, jusqu'à compenser la force exercée sur la masse sismique par la pesanteur.

Encore un autre objet de la présente invention consiste en un procédé de réalisation d'au moins un accéléromètre miniaturisé dans un substrat silicium-sur-isolant, c'est-à-dire constitué d'une plaquette de silicium recouverte d'une couche d'oxyde de silicium puis d'une couche de silicium, caractérisé en ce qu'il comporte les étapes consistant à :

a) graver la couche de silicium jusqu'à atteindre la couche d'oxyde de silicium pour définir :

- un support,
- une masse sismique,
- des moyens de liaison mécanique entre le support et la masse sismique susceptibles de fléchir sous l'effet de la force induite par une accélération à mesurer,
- au moins un organe destiné à constituer un ressort, dont l'une des extrémités fait corps avec l'un des éléments, support ou masse sismique, et dont l'autre extrémité se termine par une tête pourvue de moyens d'accrochage,
- des moyens d'accrochage sur l'autre élément, support ou masse sismique, complémentaires des moyens d'accrochage de la tête de ressort,

b) éliminer la couche d'oxyde de silicium sous les éléments autres que le support,
c) mettre le ressort sous tension mécanique par accrochage de la tête de ressort sur ledit autre élément, support ou masse sismique, jusqu'à compenser la force exercée sur la masse sismique par la pesanteur.

L'étape de gravure peut définir également des dents fixées au support pour former de premières électrodes et des dents fixées à la masse sismique pour former de secondes électrodes, disposées de façon à former des peignes interdigités.

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est une vue de dessus d'un substrat qui vient d'être gravé en vue d'obtenir un accéléromètre miniaturisé selon la présente invention,
- la figure 2 est une vue en perspective de la partie mécanique d'un accéléromètre selon la présente invention où l'effet dû à la pesanteur a été compensé,
- la figure 3 est une vue de détail de la figure 2.

La description va porter sur la réalisation de la partie mécanique d'un accéléromètre selon la présente invention grâce aux techniques de la micro-électronique qui permettent l'obtention d'accéléromètres, par exemple à détection capacitive, de faibles dimensions (par exemple 2 cm$^2$ pour la surface la plus importante). Pour plus de détails sur ces techniques, on peut se reporter au document FR-A-2 700 065 qui décrit un "procédé de fabrication d'accéléromètres utilisant la technologie silicium sur isolant". La réalisation peut être collective. Par exemple, 5 dispositifs peuvent être réalisés sur une plaquette de silicium monocristallin de 4 pouces (10,16 cm).

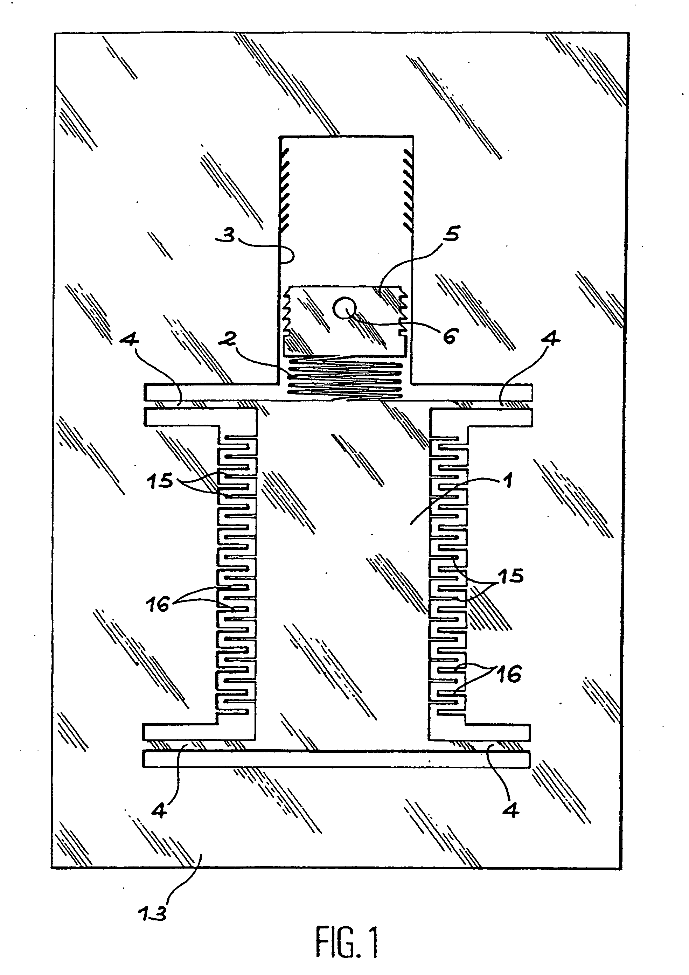

La technique de compensation proposée pour l'accéléromètre illustré par les figures 1 à 3 consiste à réaliser un ressort en silicium solidaire de la masse sismique. Le ressort est prétendu en déplaçant l'extrémité libre du ressort (c'est-à-dire l'extrémité opposée à celle qui maintient la masse sismique) jusqu'à ce que la force qu'il engendre équilibre le poids de la masse qu'il supporte. L'extrémité mobile du ressort est alors bloquée dans sa position de réglage comme cela sera décrit plus loin.

L'utilisation d'un substrat en matériau monocristallin (silicium, quartz) permet d'obtenir un facteur de qualité Q élevé pour une masse sismique M faible. L'utilisation de la microtechnologie permet la miniaturisation et une fabrication collective donc de faible coût.

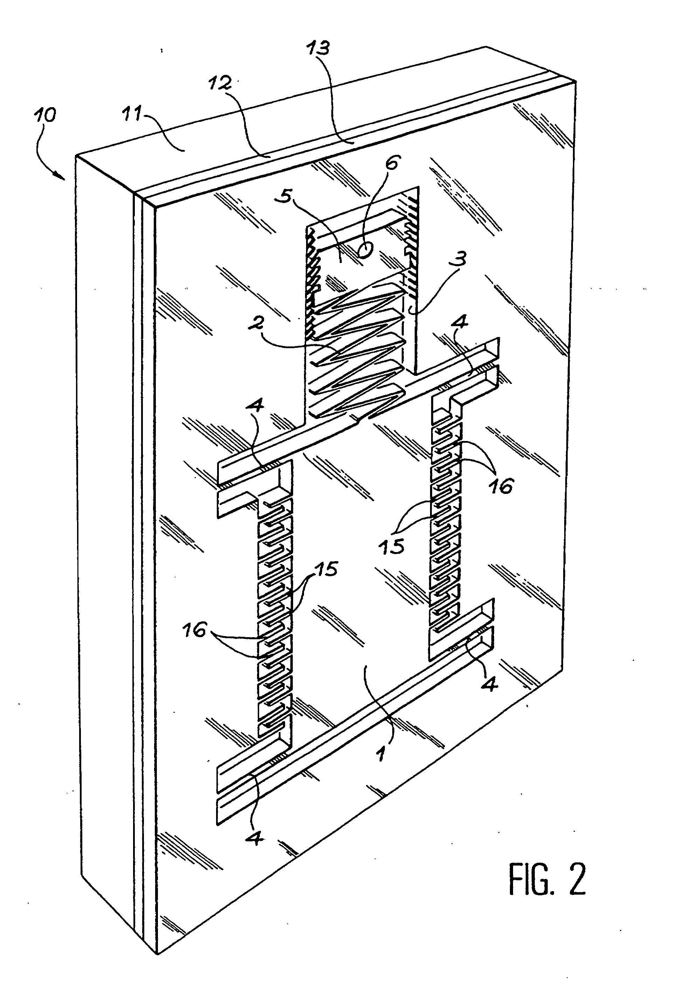

Les figures 1 à 3 illustrent la réalisation d'un accéléromètre (du moins sa partie mécanique) à partir d'un substrat du type silicium-sur-isolant (appelé SOI dans la terminologie anglo-saxonne). Ce substrat 10 est par exemple constitué d'une plaquette de silicium 11 recouverte successivement d'une couche 12 d'oxyde de silicium et d'une couche 13 de silicium monocristallin (voir la figure 2).Différents procédés connus permettent d'obtenir ce type de substrats. L'épaisseur de la couche 13 de silicium peut varier de 400 nm à 1 mm selon les besoins ou la technique de fabrication du substrat SOI. Par souci de simplification une seule structure d'accéléromètre a été représentée sur les figures.

La face libre de la couche 13 est pourvue d'un masque de résine grâce à une technique de photolithographie. La couche 13 est ensuite gravée par un procédé de gravure anisotrope par plasma. Un tel procédé est décrit dans l'article « A Survey on the Reactive Ion Etching of Silicon in Microtechnology » de H. Jansen et al., paru dans J. Micromech. Microeng. 6 (1996), pages 14-28. La gravure est réalisée jusqu'à la couche de silice 12. Ensuite, les parties de silice situées dans les évidements pratiqués dans la couche 13 et sous les parties mobiles de la structure sont dissoutes pour désolidariser les parties mobiles du reste du substrat 10.

La gravure permet de définir une masse sismique 1, un organe 2 qui fera office de ressort lorsqu'il sera tendu, et un logement 3 pour le ressort 2. La masse sismique 1 est rattachée au reste du substrat par quatre poutres 4 susceptibles de fléchir sous l'effet d'une accélération à mesurer. La gravure a laissé le ressort 2 attaché à la masse sismique 1. L'extrémité du ressort 2 opposé à la masse sismique est prolongée par une partie 5 appelée tête de ressort. La tête de ressort 5 est pourvue d'un trou 6 pour faciliter sa manoeuvre.

La silice a été éliminée sur une surface continue constituée par le logement 3, la masse sismique 1, les poutres 4 et autour de la masse sismique et des poutres. Le support est alors constitué par ce qui reste de la couche 13, de la couche isolante 12 et par la plaquette 11.

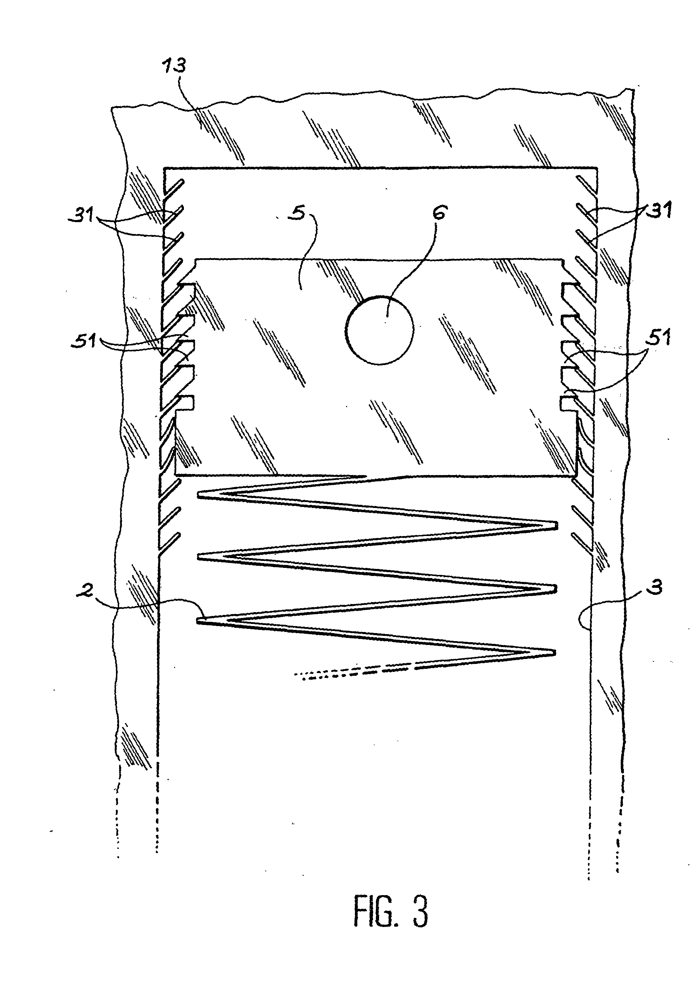

La gravure a aussi laissé subsister des lames flexibles 31 rattachées aux parois du logement 3 qui sont parallèles à l'axe du ressort 2, et des butées de retenue 51 sur les parois de la tête de ressort 5 qui sont en regard. Les lames flexibles 31 et les butées de retenue 51 sont donc d'une profondeur correspondant à l'épaisseur de la couche de silicium 13 (voir la figure 3).

A titre d'exemple, l'épaisseur de la couche de silicium 13 peut être de 200 μm, la longueur d'une lame flexible 31 peut être de 250 μm, son épaisseur de 10 μm. L'inclinaison des lames peut être de 45°. Les butées de retenue 51 peuvent être de section triangulaire. Le chevauchement des lames flexibles 31 et des butées de retenue peut être de 14 μm.

L'accéléromètre représenté est à détection capacitive. Pour cela, la gravure a laissé subsister des dents destinés à former des électrodes et disposés de façon à former des peignes interdigités de chaque côté de la masse sismique. Les parois de la masse sismique 2 qui sont perpendiculaires aux poutres 4 supportent des dents 15, tandis que les parois opposées, appartenant au support, supportent des dents 16. Après métallisation de ces dents, on obtiendra des séries de condensateurs, un condensateur élémentaire étant défini par l'espace compris entre une dent 15 et une dent 16 situé en regard.

Pour compenser la force due à la pesanteur, la tête de ressort 5 est déplacée, à l'aide d'un outil pointu introduit dans le trou 6 de la tête, dans le sens opposé à la masse sismique de manière à tendre le ressort. Les lames flexibles 31, en association avec les butées de retenue vont assurer à la fois le réglage et le maintien en position de la tête de ressort 5. Le réglage peut se faire en plaçant l'accéléromètre en position verticale. Le ressort est étiré jusqu'à ce que l'effort exercé compense le poids de la masse sismique. Le contrôle du déplacement de la masse sismique peut être effectué par la mesure des deux capacités différentielles au niveau de chaque réseau de peignes interdigités (lorsque les deux capacités sont identiques, la masse sismique est en position d'équilibre).

La symétrie et l'orientation des lames flexibles 31 permettent de bloquer définitivement dans un sens le déplacement de la tête de ressort et donc de maintenir la précontrainte appliquée au ressort. Le décalage relatif des lames flexibles et des butées de retenue permet de positionner précisément la tête de ressort par rapport au support.

La position relative des butées de retenue 51 et des lames flexibles 31 peut être prévue à la manière d'un vernier de pied à coulisse. En prévoyant des pas différents pour les butées et pour les lames, il est alors possible de régler la position de la tête de ressort avec une précision accrue.

A titre de premier exemple pour une structure SOI, l'épaisseur du ressort peut être de 200 $\mu$m (épaisseur de la couche de silicium), sa largeur de 1850 $\mu$m (correspondant à la largeur du logement 3), l'épaisseur des lames du ressort de 10 $\mu$m, le nombre de lames disposées en zigzag peut être de 200 et l'élongation approximative du ressort/ poids de la masse sismique peut être de 25 mm/0,2 g.

A titre de deuxième exemple pour une structure SOI, l'épaisseur du ressort peut être aussi de 200 $\mu$m, sa largeur de 5000 $\mu$m, l'épaisseur des lames du ressort de 30 $\mu$m, le nombre de lames disposées en zigzag peut être de 10 et l'élongation approximative du ressort/poids de la masse sismique peut être de 0,9 mm/0,07 g.

Dans le cas où le substrat est massif (bloc de quartz ou de silicium monocristallin), la gravure est effectuée dans toute l'épaisseur du substrat.

On peut ainsi réaliser des sismomètres de faible encombrement qui peuvent être introduits dans un puits de forage.

## Revendications

**1.** Accéléromètre miniaturisé comportant :

- un support,
- une masse sismique (1) susceptible d'être soumise à une force induite par une accélération à mesurer,
- des moyens de liaison mécanique (4) entre le support et la masse sismique (1), susceptibles de fléchir sous l'effet de ladite force,
- des moyens de détection permettant de déterminer l'accélération à partir de la force induite dans la masse sismique,
- des moyens élastiques (2) de compensation de la force exercée sur la masse sismique (1) par la pesanteur et reliant la masse sismique et le support.

le support, la masse sismique (1), les moyens de liaison mécanique (4) et les moyens élastiques de compensation (2) étant des éléments réalisés dans un même substrat (10), **caractérisé en ce que** des moyens de réglage sont prévus pour mettre sous tension mécanique les moyens élastiques de compensation (2) afin de compenser la force exercée sur la masse sismique (1) par la pesanteur.

**2.** Accéléromètre selon la revendication 1, **caractérisé en ce que** les moyens élastiques comprennent au moins un ressort (2) possédant deux extrémités, l'une des extrémités du ressort faisant corps avec l'un des éléments, support ou masse sismique (1), l'autre extrémité du ressort (2) étant déplaçable par les moyens de réglage pour être fixée sur l'autre élément, support ou masse sismique (1), et ainsi mettre le ressort (2) sous tension mécanique.

**3.** Accéléromètre selon la revendication 2, **caractérisé en ce que** les moyens de réglage sont des moyens permettant de déplacer l'extrémité déplaçable du ressort (2) dans un seul sens.

**4.** Accéléromètre selon la revendication 3, **caractérisé en ce que** les moyens de réglage comprennent des lames flexible (31) et des butées de retenue (51) disposées de manière conjuguée sur l'extrémité déplaçable du ressort (2) et sur l'élément, support ou masse sismique (1), sur lequel l'extrémité déplaçable du ressort est fixée.

**5.** Accéléromètre selon la revendication 4, **caractérisé en ce que** le pas des lames flexibles (31) est différent du pas des butées de retenue (51).

**6.** Accéléromètre selon l'une quelconque des revendications 1 à 5, **caractérisé en ce que** lesdits moyens de détection sont des moyens de détection capacitifs.

**7.** Accéléromètre selon la revendication 6, **caractérisé en ce que** les moyens de détection capacitifs comprennent des dents (16) fixées au support pour former de premières électrodes et des dents (15) fixées à la masse sismique (1) pour former de secondes électrodes, disposées de façon à former des peignes interdigités.

**8.** Accéléromètre selon l'une quelconque des revendications 1 à 7, **caractérisé en ce que** le substrat est constitué d'un bloc massif de quartz ou de silicium.

**9.** Accéléromètre selon l'une quelconque des revendications 1 à 7, **caractérisé en ce que** le substrat (10) est un substrat du type silicium-sur-isolant.

**10.** Procédé de réalisation d'au moins un accéléromètre miniaturisé dans un substrat d'un matériau donné, comportant les étapes consistant à :

a) graver le substrat selon son épaisseur pour définir :

- un support,
- une masse sismique (1),
- des moyens de liaison mécanique (4) entre le support et la masse sismique (1) susceptibles de fléchir sous l'effet de la force induite par une accélération à mesurer,
- au moins un organe destiné à constituer un ressort (2), dont l'une des extrémités fait corps avec l'un des éléments, support ou masse sismique (1), et dont l'autre extrémité se termine par une tête (5) pourvue de moyens d'accrochage (51),
- des moyens d'accrochage (31) sur l'autre élément, support ou masse sismique (1), complémentaires des moyens d'accrochage (51) de la tête de ressort (5),

b) mettre le ressort (2) sous tension mécanique par accrochage de la tête de ressort (5) sur ledit autre élément, support ou masse sismique (1), jusqu'à compenser la force exercée sur la masse sismique (1) par la pesanteur.

**11.** Procédé de réalisation d'au moins un accéléromètre miniaturisé dans un substrat silicium-sur-isolant (10), c'est-à-dire constitué d'une plaquette de silicium (11) recouverte d'une couche d'oxyde de silicium (12) puis d'une couche de silicium (13), **caractérisé en ce qu'**il comporte les étapes consistant à :

a) graver la couche de silicium (13) jusqu'à atteindre la couche d'oxyde de silicium (12) pour définir :

- un support,
- une masse sismique (1),
- des moyens de liaison mécanique (4) entre le support et la masse sismique (1) susceptibles de fléchir sous l'effet de la force induite par une accélération à mesurer,
- au moins un organe destiné à constituer un ressort (2), dont l'une des extrémités fait corps avec l'un des éléments, support ou masse sismique (1), et dont l'autre extrémité se termine par une tête (5) pourvue de moyens d'accrochage (51),
- des moyens d'accrochage (31) sur l'autre élément, support ou masse sismique (1), complémentaires des moyens d'accrochage (51) de la tête de ressort (5),

b) éliminer la couche d'oxyde de silicium sous les éléments autres que le support,
c) mettre le ressort (2) sous tension mécanique par accrochage de la tête de ressort (5) sur ledit autre élément, support ou masse sismique (1), jusqu'à compenser la force exercée sur la masse sismique par la pesanteur.

**12.** Procédé selon l'une des revendications 10 ou 11, dans lequel l'étape de gravure définit également des dents (16) fixées au support pour former de premières électrodes et des dents (15) fixées à la masse sismique (1) pour former de secondes électrodes, disposées de façon à former des peignes interdigités.

**Patentansprüche**

**1.** Miniaturisierter Beschleunigungsmesser mit:

- einem Träger,

- einer seismischen Masse (1), die einer durch eine zu messende Beschleunigung induzierten Kraft ausgesetzt werden kann,
- mechanischen Verbindungsmitteln (4) zwischen dem Träger und der seismischen Masse (1), die unter der Wirkung der Kraft nachgeben können,
- Erfassungsmitteln, die eine Bestimmung der Beschleunigung anhand der in der seismischen Masse induzierten Kraft gestatten,
- elastischen Mitteln (2) zum Ausgleichen der auf die seismische Masse (1) durch die Schwerkraft ausgeübten Kraft und zum Verbinden der seismischen Masse und des Trägers,
- wobei der Träger, die seismische Masse (1), die mechanischen Verbindungsmittel (4) und die elastischen Ausgleichsmittel (2) in ein und dem selben Substrat (10) ausgeführte Elemente sind, **dadurch gekennzeichnet, daß** Einstellmittel- bzw. Steuermittel vorgesehen sind, um die elastischen Ausgleichsmittel (2) einer mechanischen Spannung auszusetzen, um die auf die seismische Masse (1) durch die Schwerkraft ausgeübte Kraft auszugleichen.

2. Beschleunigungsmesser nach Anspruch 1, **dadurch gekennzeichnet, daß** die elastischen Mittel mindestens eine Feder (2) umfassen, die zwei Enden besitzt, wobei eines der Enden der Feder mit einem der Elemente, entweder dem Träger oder der seismischen Masse (1), einen Körper bildet, und das andere Ende der Feder (2) durch die Einstell- bzw. Steuermittel verschiebbar ist, um am anderen Element, entweder dem Träger oder der seismischen Masse (1), befestigt zu werden und so die Feder (2) einer mechanischen Spannung auszusetzen.

3. Beschleunigungsmesser nach Anspruch 2, **dadurch gekennzeichnet, daß** die Einstellmittel bzw. Steuermittel, Mittel sind, die eine Verschiebung des verschiebbaren Endes der Feder (2) in nur einer Richtung gestatten.

4. Beschleunigungsmesser nach Anspruch 3, **dadurch gekennzeichnet, daß** die Einstellmittel flexible Lamellen (31) sowie Rückhalteanschläge (51) aufweisen, die auf zusammenwirkende Weise an dem verschiebbaren Ende der Feder (2) und an dem Element, dem Träger oder der seismischen Masse (1), an dem/der das verschiebbare Ende der Feder befestigt ist, angeordnet sind.

5. Beschleunigungsmesser nach Anspruch 4, **dadurch gekennzeichnet, daß** der Abstand bzw. die Teilung der flexiblen Lamellen (31) unterschiedlich zum Abstand bzw. der Teilung der Rückhalteanschläge (51) ist.

6. Beschleunigungsmesser nach Anspruch 1 bis 5, **dadurch gekennzeichnet, daß** die Erfassungsmittel kapazitive Erfassungsmittel sind.

7. Beschleunigungsmesser nach Anspruch 6, **dadurch gekennzeichnet, daß** die kapazitiven Erfassungsmittel umfassen: Zähne (16), die am Träger befestigt sind, um erste Elektroden sowie Zähne (15), die an der seismischen Masse (1) befestigt sind, um zweite Elektroden, die so angeordnet sind, daß sie ineinander verzahnte Kämme bilden. zu bilden, und

8. Beschleunigungsmesser nach einem der Ansprüche 1 bis 7, **dadurch gekennzeichnet, daß** das Substrat aus einem massiven Quarzblock oder Siliziumblock gebildet ist.

9. Beschleunigungsmesser nach einem der Ansprüche 1 bis 7, **dadurch gekennzeichnet, daß** das Substrat (10) ein Substrat vom Typ Silizium-auf-Isoliermittel ist.

10. Herstellungsverfahren mindestens eines miniaturisierten Beschleunigungsmessers in/auf einem Träger eines gegebenen Materials, umfassend die Schritte, die bestehen in:

   a) Ätzen des Substrats nach seiner Dicke, um festzulegen:

   - einen Träger
   - eine seismische Masse (1)
   - mechanische Verbindungsmittel (4) zwischen dem Träger und der seismischen Masse (1), die unter der Wirkung der durch eine zu messende Beschleunigung induzierten Kraft nachgeben können,
   - mindestens ein Element, das zur Bildung einer Feder (2) vorgesehen ist, von der eines der Enden mit einem der Elemente, nämlich dem Träger oder der seismischen Masse (1), einen Körper bildet, und von der das andere Ende in einem Kopf (5) endet, der mit Hakenmitteln (51) versehen ist,
   - Hakenmittel (31) am anderen Element, nämlich dem Träger oder der seismischen Masse (1), die zu den Hakenmitteln (51) des Federkopfs (5) komplementär sind,

b) unter mechanische Spannung versetzen der Feder (2) durch Einhaken des Federkopfs (5), an dem anderen Element, dem Träger oder der seismischen Masse (1), bis die auf die seismische Masse (1) durch die Schwerkraft ausgeübte Kraft ausgeglichen wird.

11. Herstellungsverfahren mindestens eines miniaturisierten Beschleunigungsmessers in/auf einem Substrat Silizium-auf-Isoliermittel (10), d.h. das aus einer Siliziumplatte (11) gebildet wird, die mit einer Siliziumoxidschicht (12) und anschließend mit einer Siliziumschicht (13) bedeckt wird, **dadurch gekennzeichnet, daß** es die Schritte umfaßt, die bestehen in:

a) Ätzen der Siliziumschicht (13), bis die Siliziumoxidschicht (12) erreicht ist, um festzulegen:

- einen Träger
- eine seismische Masse (1)
- mechanische Verbindungsmittel (4) zwischen dem Träger und der seismischen Masse (1), die unter der Wirkung der durch eine zu messende Beschleunigung induzierten Kraft nachgeben können,
- mindestens ein Element, das zur Bildung einer Feder (2) vorgesehen ist, von der eines der Enden mit einem der Elemente, nämlich dem Träger oder der seismischen Masse (1) einen Körper bildet, und von der das andere Ende in einem mit Hakenmitteln (51) versehenen Kopf 5 endet.
- Hakenmittel (31) am anderen Element, nämlich dem Träger oder der seismischen Masse (1), die zu den Hakenmitteln (51) des Federkopfs (5) komplementär sind,

b) Eliminierung der Siliziumoxidschicht unter den Elementen außer dem Träger,

c) unter mechanische Spannung setzen der Feder (2) durch Einhaken des Federkopfs (5), an dem anderem Element, dem Träger oder der seismischen Masse (1), bis die auf die seismische Masse (1) durch die Schwerkraft ausgeübte Kraft ausgeglichen wird.

12. Verfahren nach einem der Ansprüche 10 oder 11, wobei der Schritt des Ätzens auch Zähne (16) festlegt, die am Träger befestigt sind, um erste Elektroden zu bilden, sowie Zähne (15), die an der seismischen Masse (1) befestigt sind, um zweite Elektroden zu bilden, die derart angeordnet sind, daß sie ineinandergreifende Kämme bilden.

**Claims**

1. Miniaturized accelerometer comprising:

- a support,
- a seismic mass (1) which can be exposed to a force induced by an acceleration to be measured,
- mechanical connection means (4) between the support and the seismic mass (1), which can bend under the effect of said force,
- detection means making it possible to determine the acceleration on the basis of the force induced in the seismic mass,
- elastic means (2) for compensating the force exerted on the seismic mass (1) by gravity and linking the seismic mass and the support,

the support, the seismic mass (1), the mechanical connecting means (4) and the elastic compensating means (2) being elements produced in a same substrate (10), **characterized in that** regulating means are provided for placing under mechanical tension the elastic compensating means (2), in order to compensate the force exerted on the seismic mass (1) by gravity.

2. Accelerometer according to claim 1, **characterized in that** the elastic means comprise at least one spring (2) having two ends, one of the spring ends being integral with one of the elements, i.e. the support or seismic mass (1), the other end of the spring (2) being displaceable by regulating means so as to be fixed on the other element, i.e. the support or seismic mass (1), and thus placing the spring (2) under mechanical tension.

3. Accelerometer according to claim 2, **characterized in that** the regulating means are able to displace the displaceable end of the spring (2) in a single direction.

**4.** Accelerometer according to claim 3, **characterized in that** the regulating means comprise flexible blades (31) and retaining stops arranged in coupled manner on the displaceable end of the spring (2) and on the element, i.e. support or seismic mass (1), on which the displaceable end of the spring is fixed.

**5.** Accelerometer according to claim 4, **characterized in that** the spacing of the flexible blades (31) differs from that of the retaining stops (51).

**6.** Accelerometer according to any one of the claims 1 to 5, **characterized in that** the detection means are capacitive detection means.

**7.** Accelerometer according to claim 6, **characterized in that** the capacitive detection means comprise teeth (16) fixed to the support in order to form first electrodes and teeth (15) fixed to the seismic mass (1) in order to form second electrodes, arranged so as to form split-finger transducers.

**8.** Accelerometer according to any one of the claims 1 to 7, **characterized in that** the substrate is constituted by a solid quartz or silicon block.

**9.** Accelerometer according to any one of the claims 1 to 7, **characterized in that** the substrate (10) is of the silicon-on-insulator type.

**10.** Process for producing at least one miniaturized accelerometer in a substrate of a given material, comprising the stages consisting of:

a) etching the substrate in accordance with its thickness to define:

- a support,
- a seismic mass (1),
- mechanical connecting means (4) between the support and the seismic mass (1) able to bend under the effect of the force induced by an acceleration to be measured,
- at least one member for constituting a spring (2), whereof one of the ends is integral with one of the elements, i.e. support or seismic mass (1), and whose other end is terminated by a head (15) provided with attachment means (51),
- means (31) for attaching to the other element, i.e. support or seismic mass (1), complimentary of the attachment means (51) of the spring head (5),

b) placing the spring (2) under mechanical tension by attaching the spring head (5) to said other element, i.e. support or seismic mass (1), until there is a compensation of the force exerted on the seismic mass (1) by gravity.

**11.** Process for producing at least one miniaturized accelerometer in a silicon-on-insulator substrate (10), i.e. constituted by a silicon wafer (11) covered by a silicon oxide layer (12) and then a silicon layer (13), comprising the stages consisting of:

a) etching the silicon layer (13) until the silicon oxide layer (12) is reached, in order to define:

- a support,
- a seismic mass (1),
- mechanical connecting means (4) between the support and the seismic mass (1) able to bend under the effect of the force induced by an acceleration to be measured,
- at least one member for constituting a spring (2), whereof one of the ends is integral with one of the elements, i.e. the support or seismic mass (1), and whose other end is terminated by a head (5), provided with attachment means (51),
- attachment means (31) on the other element, i.e. support or seismic mass (1), complimentary of the attachment means (51) of the spring head (5),

b) eliminating the silicon oxide layer below the elements other than the support,
c) placing the spring (2) under mechanical tension by attaching the spring head (5) to said other element, i.e. support or seismic mass (1), until the force exerted on the seismic mass by gravity is compensated.

12. Process according to one of the claims 10 or 11, **characterized in that** the etching stage also defines teeth (16) fixed to the support for forming first electrodes and teeth (15) fixed to the seismic mass (1) for forming second electrodes, arranged so as to form split-finger transducers.

FIG. 1

FIG. 2

FIG. 3